# EUROPEAN PATENT SPECIFICATION

(11) **EP 3 769 515 B1**
(45) Date of publication and mention of the grant of the patent: **24.09.2025**
(21) Application number: 19709227.3
(22) Date of filing: 19.02.2019
(51) Int. Cl.: H04N 13/00, H04N 21/00, H04L 12/00

(54) **IMMERSIVE MEDIA METRICS FOR RENDERED VIEWPORTS**
IMMERSIVE MEDIA-METRIKEN FÜR WIEDERGEGEBENE ANSICHTSFENSTER
MÉTRIQUES MULTIMÉDIAS IMMERSIVES POUR FENÊTRES D'AFFICHAGE RENDUES

(30) Priority: 22.03.2018 US 201862646425 P
(43) Date of publication of application: 27.01.2021
(73) Proprietor: HUAWEI TECHNOLOGIES CO., LTD., Shenzhen, Guangdong 518129 (CN)
(72) Inventor: WANG, Ye-Kui, San Diego, California 92130 (US)
(74) Representative: Grünecker Patent- und Rechtsanwälte PartG mbB
(86) International application number: PCT/US2019/018515
(87) International publication number: WO 2019/182703

(56) References cited:
- WO-A1-2018/049221
- WO-A1-2018/175855
- US-A1- 2014 317 308
- US-A1- 2017 353 743
- US-A1- 2018 077 210
- YONG HE ET AL: "MPEG-I: VR Experience Metrics", 119. MPEG MEETING; 17-7-2017 - 21-7-2017; TORINO; (MOTION PICTURE EXPERT GROUP OR ISO/IEC JTC1/SC29/WG11),, no. m41120, 11 July 2017 (2017-07-11), XP030069463
- YAGO SANCHEZ ET AL: "DASH-VR Architecture", 116. MPEG MEETING; 17-10-2016 - 21-10-2016; CHENGDU; (MOTION PICTURE EXPERT GROUP OR ISO/IEC JTC1/SC29/WG11),, no. m39279, 12 October 2016 (2016-10-12), XP030067625
- YONG HE ET AL: "[MPEG-I] proposed WD on Part 8: Reportable Data for Immersive Service", 120. MPEG MEETING; 23-10-2017 - 27-10-2017; MACAU; (MOTION PICTURE EXPERT GROUP OR ISO/IEC JTC1/SC29/WG11),, no. m41720, 17 October 2017 (2017-10-17), XP030070062
- YONG HE ET AL: "DASH SAND signaling for data prefetching and caching", 119. MPEG MEETING; 17-7-2017 - 21-7-2017; TORINO; (MOTION PICTURE EXPERT GROUP OR ISO/IEC JTC1/SC29/WG11),, no. m41121, 11 July 2017 (2017-07-11), XP030069464
- Y-K WANG ET AL: "Signalling for data prefetching in DASH", 117. MPEG MEETING; 16-1-2017 - 20-1-2017; GENEVA; (MOTION PICTURE EXPERT GROUP OR ISO/IEC JTC1/SC29/WG11),, no. m39981, 11 January 2017 (2017-01-11), XP030068326
- EMMANUEL THOMAS ET AL: "ENHANCING MPEG DASH PERFORMANCE VIA SERVER AND NETWORK ASSISTANCE", IBC 2015 CONFERENCE, 11-15 SEPTEMBER 2015, AMSTERDAM,, 11 September 2015 (2015-09-11), XP030082549
- FRANCEALISADEVLICTÉLÉCOMBRETAGNE XAVIERCORBILLONTÉLÉCOMBRETAGNE ET AL: "Viewport-AdaptiveNavigable360-DegreeVideoDelivery", 26 September 2016 (2016-09-26), XP055449275, Retrieved from the Internet <URL:https://www.researchgate.net/profile/Gwendal_Simon-telecom_sudpariseu/publication/308647414_Viewport-Adaptive_Navigable_360-Degree_Video_Delivery/links/580a787e08ae74852b5304a7/Viewport-Adaptive-Navigable-360-Degree-Video-Delivery.pdf> [retrieved on 20180208]

## Description

### TECHNICAL FIELD

The present disclosure is generally related to Virtual Reality (VR) video systems, and is specifically related to signaling VR video related data via Dynamic Adaptive Streaming over Hypertext transfer protocol (DASH).

### BACKGROUND

VR, which may also be known as omnidirectional media, immersive media, and/or three hundred sixty degree media, is an interactive recorded and/or computer-generated experience taking place within a simulated environment and employing visual, audio, and/or haptic feedback. For a visual perspective, VR provides a sphere (or sub-portion of a sphere) of imagery with a user positioned at the center of the sphere. The sphere of imagery can be rendered by a head mounted display (HMD) or other display unit. Specifically, a VR display renders a sub-portion of the sphere. The user can dynamically change the position and/or angle rendered portion of the sphere to experience the environment presented by the VR video. Each picture, also known as a frame, of the VR video includes both the area of the sphere that is rendered and the area of the sphere that is not rendered. Hence, a VR frame includes significantly more data than a non-VR video image. Content providers are interested in providing VR video on a streaming basis. However, VR video includes significantly more data and different attributes than traditional video. As such, streaming mechanisms for traditional video are not designed to efficiently stream VR video.

The document WO 2018/175855 A1 discloses metrics and messages to improve experience for 360-degree adaptive streaming. The document YONG HE ET AL, "MPEG-I: VR Experience Metrics", 119. MPEG MEETING; ISO/IEC JTC1/SC29/WG11, no. m41120, relates to a VR-metrics client reference model and a set of VR-related metrics for monitoring, comparing and analyzing VR user experience and performance across different clients, players, devices and networks. WO 2018/049221 A1 discloses systems and methods related to monitoring and reducing latency for viewport adaptive streaming of 360-degree video. The document YAGO SANCHEZ ET AL, "DASH-VR Architecture", 116. MPEG MEETING; ISO/IEC JTC1/SC29/WG11, no. m39279, discusses aspects about DASH-VR, including VR-streaming specific attributes and the scope of DASH-VR for providing mechanisms to content provider to enable a service of quality and enough flexibility to improve their services. The document YONG HE ET AL, "[MPEG-I] proposed WD on Part 8: Reportable Data for Immersive Service", 120. MPEG MEETING; ISO/IEC JTC1/SC29/WG11, no. m41720, relates to a VR-metrics client reference model and a set of VR-related essential reportable data for monitoring, comparing and analyzing VR user experience and performance across different clients, players, devices and networks for immersive services.

### SUMMARY

In an embodiment, the disclosure includes a method implemented in a Dynamic Adaptive Streaming over Hypertext Transfer Protocol (HTTP) (DASH) client-side network element (NE) according to claim 1. The method comprises receiving, by a receiver, a DASH Media Presentation Description (MPD) describing media content including a virtual reality (VR) video sequence. The method further comprises obtaining, via the receiver, the media content based on the MPD. The method further comprises forwarding the media content to one or more rendering devices for rendering. The method further comprises determining, via a processor, a rendered viewports metric including viewport information for the VR video sequence as rendered by the one or more rendering devices, the rendered viewports metric including a plurality of entries with at least one of the entries indicating a viewport and a plurality of media samples of the VR video sequence applied to the viewport. The method further comprises transmitting, via a transmitter, the rendered viewports metric toward a provider server. In some cases, a client sends data to a server to indicate viewports that have been viewed by the user. Specifically, viewport information can be sent for each VR video sequence frame, for example by indicating frame presentation time. However, constant viewport positions are often used for many frames. Hence, such mechanisms may signals redundant viewport information for each frame after the first when the viewport does not change. The present embodiment employs a rendered viewport views metric that includes a start time and a duration (or end time) for a viewpoint entry. In this manner, a single entry can be used for a plurality of rendered VR frames until the viewport moves, for example due to a user moving their head while wearing a HMD.

The plurality of entries in the rendered viewports metric includes an entry object for each of a plurality of viewports rendered for a user by the one or more rendering devices.

Each entry object includes a start time element specifying a media presentation time of an initial media sample of the VR video sequence applied while rendering a corresponding viewport associated with the entry object.

Either, each entry object includes a duration element specifying a time duration of continuously presented media samples of the VR video sequence applied to the corresponding viewpoint associated with the entry object.

Or, alternatively, each entry object includes an end time element specifying a media presentation time of a final media sample of the VR video sequence applied while rendering the corresponding viewport associated with the entry object.

Optionally, in any of the preceding aspects, another implementation of the aspect provides, wherein each entry object includes a viewport element specifying a region of the VR video sequence rendered by the corresponding viewport associated with the entry object.

Optionally, in any of the preceding aspects, another implementation of the aspect provides, wherein the DASH client-side NE is a client, a media aware intermediate NE responsible for communicating with a plurality of clients, or combinations thereof.

In an embodiment, the disclosure includes a DASH client-side NE according to claim 4, comprising a receiver configured to receive a DASH MPD describing media content including a VR video sequence, and obtain the media content based on the MPD. The DASH client-side NE also comprises one or more ports configured to forward the media content to one or more rendering devices for rendering. The DASH client-side NE also comprises a processor coupled to the receiver and the ports. The processor is configured to determine a rendered viewports metric including viewport information for the VR video sequence as rendered by the one or more rendering devices, the rendered viewports metric including a plurality of entries with at least one of the entries indicating a viewport and a plurality of media samples of the VR video sequence applied to the viewport. The processor is also configured to transmit, via the one or more ports, the rendered viewports metric toward a provider server. In some cases, a client sends data to a server to indicate viewports that have been viewed by the user. Specifically, viewport information can be sent for each VR video sequence frame, for example by indicating frame presentation time. However, constant viewport positions are often used for many frames. Hence, such mechanisms may signals redundant viewport information for each frame after the first when the viewport does not change. The present embodiment employs a rendered viewport views metric that includes a start time and a duration (or end time) for a viewpoint entry. In this manner, a single entry can be used for a plurality of rendered VR frames until the viewport moves, for example due to a user moving their head while wearing a HMD.

The plurality of entries in the rendered viewports metric includes an entry object for each of a plurality of viewports rendered for a user by the one or more rendering devices.

Each entry object includes a start time element specifying a media presentation time of an initial media sample of the VR video sequence applied while rendering a corresponding viewport associated with the entry object.

Either, each entry object includes a duration element specifying a time duration of continuously presented media samples of the VR video sequence applied to the corresponding viewpoint associated with the entry object.

Or, alternatively, each entry object includes an end time element specifying a media presentation time of a final media sample of the VR video sequence applied while rendering the corresponding viewport associated with the entry object.

Optionally, in any of the preceding aspects, another implementation of the aspect provides, wherein each entry object includes a viewport element specifying a region of the VR video sequence rendered by the corresponding viewport associated with the entry object.

Optionally, in any of the preceding aspects, another implementation of the aspect provides, wherein the DASH client-side NE is a client coupled to the one or more rendering devices via the one or more ports, and further comprising a transmitter configured to communicate with the DASH content server via at least one of the one or more ports.

Optionally, in any of the preceding aspects, another implementation of the aspect provides, wherein the DASH client-side NE is a media aware intermediate NE, and further comprising at least one transmitter coupled to the one or more ports configured to forward the media content to one or more rendering devices via one or more clients and transmit the rendered viewports metric toward the DASH content server.

In an embodiment, the disclosure includes a non-transitory computer readable medium comprising a computer program product for use by a video coding device, the computer program product comprising computer executable instructions stored on the non-transitory computer readable medium such that when executed by a processor cause the video coding device to perform the method of any of the abovementioned aspects.

In a non-claimed embodiment, the disclosure includes a DASH client-side NE comprising a receiving means for receiving a DASH MPD describing media content including a VR video sequence, and obtaining the media content based on the MPD. The DASH client-side NE also comprises a forwarding means for forwarding the media content to one or more rendering devices for rendering. The DASH client-side NE also comprises a rendered viewports metric means for determining a rendered viewports metric including viewport information for the VR video sequence as rendered by the one or more rendering devices, the rendered viewports metric including a plurality of entries with at least one of the entries indicating a viewport and a plurality of media samples of the VR video sequence applied to the viewport. The DASH client-side NE also comprises a transmitting means for transmitting the rendered viewports metric toward a provider server. In some cases, a client sends data to a server to indicate viewports that have been viewed by the user. Specifically, viewport information can be sent for each VR video sequence frame, for example by indicating frame presentation time. However, constant viewport positions are often used for many frames. Hence, such mechanisms may signals redundant viewport information for each frame after the first when the viewport does not change. The present embodiment employs a rendered viewport views metric that includes a start time and a duration (or end time) for a viewpoint entry. In this manner, a single entry can be used for a plurality of rendered VR frames until the viewport moves, for example due to a user moving their head while wearing a HMD.

Optionally, in any of the preceding aspects, another implementation of the aspect provides, wherein the plurality of entries in the rendered viewports metric includes an entry object for each of a plurality of viewports rendered for a user by the one or more rendering devices.

Optionally, in any of the preceding aspects, another implementation of the aspect provides, wherein each entry object includes a start time element specifying a media presentation time of an initial media sample of the VR video sequence applied while rendering a corresponding viewport associated with the entry object.

Optionally, in any of the preceding aspects, another implementation of the aspect provides, wherein each entry object includes a duration element specifying a time duration of continuously presented media samples of the VR video sequence applied to the corresponding viewpoint associated with the entry object.

Optionally, in any of the preceding aspects, another implementation of the aspect provides, wherein each entry object includes an end time element specifying a media presentation time of a final media sample of the VR video sequence applied while rendering the corresponding viewport associated with the entry object.

Optionally, in any of the preceding aspects, another implementation of the aspect provides, wherein each entry object includes a viewport element specifying a region of the VR video sequence rendered by the corresponding viewport associated with the entry object.

In an embodiment, the disclosure includes a method according to claim 9, comprising querying measurable data via one or more observation points (OPs), from functional modules to calculate metrics at a metrics computing and reporting (MCR) module, the metrics including a list of viewports that have been rendered at particular intervals of media presentation times as used by VR clients for rendering VR video, The method also comprises employing a rendered viewports metric to report the list of viewports to an analytics server.

The rendered viewports metric includes an entry object for each of a plurality of rendered viewports.

Each entry object includes a start time (startTime) of type Media-Time specifying a media presentation time of a first played out media sample when a viewport indicated in a current entry is rendered starting from the first played out media sample.

Each entry object includes a duration of type integer specifying a time duration, in units of milliseconds, of continuously presented media samples when a viewport indicated in a current entry is rendered and starting from a media sample indicated by staitTime.

Optionally, in any of the preceding aspects, another implementation of the aspect provides, wherein each entry object includes a viewport of type viewport data type (ViewportDataType) indicating a region of omnidirectional media corresponding to a viewport that is rendered starting from a media sample indicated by startTime.

For the purpose of clarity, any one of the foregoing embodiments may be combined with any one or more of the other foregoing embodiments to create a new embodiment within the scope of the present disclosure.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of an example system for VR based video streaming.
FIG. 2 is a flowchart of an example method of coding a VR video.
FIG. 3 is a schematic diagram of an example architecture for VR video presentation by a VR client.
FIG. 4 is a protocol diagram of an example media communication session.
FIG. 5 is a schematic diagram of an example DASH Media Presentation Description (MPD) that may be employed for streaming VR video during a media communication session.
FIG. 6 is a schematic diagram illustrating an example rendered viewports metric.
FIG. 7 is a schematic diagram illustrating an example video coding device.
FIG. 8 is a flowchart of an example method of communicating a rendered viewports metric containing information related to a plurality of viewports rendered a rendering device.
FIG. 9 is a schematic diagram of an example DASH client-side network element (NE) for communicating a rendered viewports metric containing information related to a plurality of viewports rendered a rendering device.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

DASH is a mechanism for streaming video data across a network. DASH provides a Media Presentation Description (MPD) file that describes a video to a client. Specifically, a MPD describes various representations of a video as well as the location of such representations. For example, the representations may include the same video content at different resolutions. The client can obtain video segments from the representations for display to the client. Specifically, the client can monitor the video buffer and/or network communication speed and dynamically change video resolution based on current conditions by switching between representations based on data in the MPD.

When applied to VR video, the MPD allows the client to obtain spherical video frames or portions thereof. The client can also determine a Field Of View (FOV) desired by the user. The FOV includes a sub-portion of the spherical video frames that a user desires to view. The client can then render the portion of the spherical video frames corresponding to the FOV onto a viewport. The FOV and viewport may change dynamically at run time. For example, a user may employ an HMD that displays a FOV/viewport of the spherical video frames based on the user's head movement. This allows the user to view the VR video as if the user were present at the location of the VR camera at the time of recording. In another example, a computer coupled to a display screen (and/or a television) can display a FOV/viewport on a corresponding screen based on mouse movement, keyboard input, remote control input, etc. A FOV/viewpoit may even be predefined, which allows a user to experience the VR content as specified by a video producer. A group of client devices can be setup to display different FOVs and viewports on different rendering devices. For example, a computer can display a first FOV on an HMD and a second FOV to on a display screen/television.

Content producers may be interested in the viewports rendered for viewing by the end users. For example, knowledge of the rendered viewports may allow content producers to focus on different details in future productions. As a particular example, a high number of users viewing viewports pointing a particular location of a sports arena during a sporting event may indicate that a camera should be positioned at that location to provide a better view when filming subsequent sporting events. Accordingly, viewport information can be collected by service providers and used to enhance immersive media quality and related experiences. However, mechanisms for communicating viewport information may be inefficient. For example, a viewport may or may not change for each frame of VR video. An example mechanism may report a viewport rendered for each frame of VR video. This results in a metric being created and communicated for every frame. In most real world instances, a user generally views many frames in a row using the same viewport, and hence such a mechanism results in communicating significant amounts of redundant viewport information.

Disclosed herein are mechanisms to support efficient communication of viewport information related to VR video as rendered by a rendering device associated with a client. Specifically, a rendered viewports metric can be employed to store viewport information for multiple frames. For example, the rendered viewports metric can include multiple entries, where each entry describes a rendered viewport and a plurality of media samples (e.g., frames) of the VR video applied to the viewport. Such media samples can be described by a start time and a duration. Hence, a single entry can describe an entire group of media samples that employ the same viewport rather than reporting the viewport separately for each frame. This approach may significantly reduce communication overhead as well as reduce memory usage for such reporting functions. The rendered viewports metric can also be used to aggregate data from multiple rendering devices associated with a single client and/or aggregate data from multiple clients. For example, a DASH client-side network element (NE) may report viewport information in a rendered viewports metric. As used herein, a DASH client-side NE may include a client device, a media aware intermediate NE, and/or other client/network gateway related to multiple display devices capable of rendering multiple viewports of media content. The rendered viewports metric may be configured as an ordered list of entries or an unordered set of entries. Accordingly, a client can obtain an MPD file, stream VR media content, render the VR media content onto a viewport based on a user selected FOV, and then report the viewport and corresponding VR media content frames toward a DASH content server, analytics server, and/or other provider server by employing a rendered viewports metric.

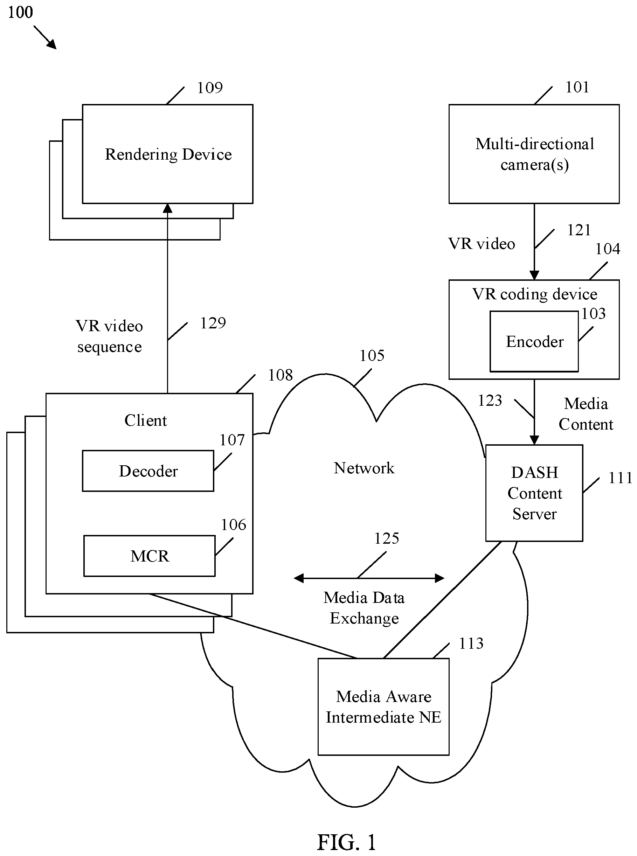

FIG. 1 is a schematic diagram of an example system 100 for VR based video streaming. System 100 includes a multi-directional camera 101, a VR coding device 104 including an encoder 103, a DASH content server 111, a client 108 with a decoder 107 and a metrics computing and reporting (MCR) 106, and a rendering device 109. The system 100 also includes a network 105 to couple the DASH content server 111 to the client 108. In some examples, the network 105 also includes a media aware intermediate NE 113.

The multi-directional camera 101 comprises an array of camera devices. Each camera device is pointed at a different angle so that the multi-directional camera 101 can take multiple directional video streams of the surrounding environment from a plurality of angles. For example, multi-directional camera 101 can take VR video 121 of the environment as a sphere with the multi-directional camera 101 at the center of the sphere. As used herein, sphere and spherical video refers to both a geometrical sphere and sub-portions of a geometrical sphere, such as spherical caps, spherical domes, spherical segments, etc. For example, a multi-directional camera 101 may take a one hundred and eighty degree video to cover half of the environment so that a production crew can remain behind the multi-directional camera 101. A multi-directional camera 101 can also take VR video 121 in three hundred sixty degrees (or any sub-portion thereof). However, a portion of the floor under the multi-directional camera 101 may be omitted, which results in video of less than a perfect sphere. Hence, the term sphere, as used herein, is a general term used for clarity of discussion and should not be considered limiting from a geometrical stand point. It should be noted that multi-directional camera 101 as described is an example camera capable of capturing VR video 121, and that other camera devices may also be used to capture VR video (e.g., a camera, a fisheye lens).

The VR video 121 from the multi-directional camera 101 is forwarded to the VR coding device 104. The VR coding device 104 may be a computing system including specialized VR coding software. The VR coding device 104 may include an encoder 103. In some examples, the encoder 103 can also be included in a separate computer system from the VR coding device 104. The VR coding device 104 is configured to convert the multiple directional video streams in the VR video 121 into a single multiple directional video stream including the entire recorded area from all relevant angles. This conversion may be referred to as image stitching. For example, frames from each video stream that are captured at the same time can be stitched together to create a single spherical image. A spherical video stream can then be created from the spherical images. For clarity of discussion, it should be noted that the terms frame, picture, and image may be used interchangeably herein unless specifically noted.

The spherical video stream can then be forwarded to the encoder 103 for compression. An encoder 103 is a device and/or program capable of converting information from one format to another for purposes of standardization, speed, and/or compression. Standardized encoders 103 are configured to encode rectangular and/or square images. Accordingly, the encoder 103 is configured to map each spherical image from the spherical video stream into a plurality of rectangular sub-pictures. The sub-pictures can then be placed in separate sub-picture video streams. As such, each sub-picture video stream displays a stream of images over time as recorded from a sub-portion of the spherical video stream. The encoder 103 can then encode each sub-picture video stream to compress the video stream to a manageable file size. In general, the encoder 103 partitions each frame from each sub-picture video stream into pixel blocks, compresses the pixel blocks by inter-prediction and/or intra-prediction to create coding blocks including prediction blocks and residual blocks, applies transforms to the residual blocks for further compression, and applies various filters to the blocks. The compressed blocks as well as corresponding syntax are stored in bitstream(s), for example as tracks in International Standardization Organization base media file format (ISOBMFF) and/or in omnidirectional media format (OMAF).

The encoded tracks from the VR video 121, including the compressed blocks and associated syntax, form part of the media content 123. The media content 123 may include encoded video files, encoded audio files, combined audio video files, media represented in multiple languages, subtitled media, metadata, or combinations thereof. The media content 123 can be separated into adaptation sets. For example, video from a viewpoint can be included in an adaptation set, audio can be included in another adaptation set, closed captioning can be included in another adaptation set, metadata can be included into another adaptation set, etc. Adaptation sets contain media content 123 that is not interchangeable with media content 123 from other adaptation sets. The content in each adaptation set can be stored in representations, where representations in the same adaptation set are interchangeable. For example, VR video 121 from a single viewpoint can be downsampled to various resolutions and stored in corresponding representations. As used herein, a viewpoint is a location of one or more cameras when recording a VR video 121. As another example, audio (e.g., from a single viewpoint) can be downsampled to various qualities, translated into different languages, etc. and stored in corresponding representations.

The media content 123 can be forwarded to a DASH content server 111 for distribution to end users over a network 105. The DASH content server 111 may be any device configured to serve HyperText Transfer Protocol (HTTP) requests from a client 108. The DASH content server 111 may comprise a dedicated server, a server cluster, a virtual machine (VM) in a cloud computing environment, or any other suitable content management entity. The DASH content server 111 may receive media content 123 from the VR coding device 104. The DASH content server 111 may generate an MPD describing the media content 123. For example, the MPD can describe preselections, viewpoints, adaptation sets, representations, metadata tracks, segments thereof, etc. as well as locations where such items can be obtained via a HTTP request (e.g., a HTTP GET).

A client 108 with a decoder 107 may enter a media communication session 125 with the DASH content server 111 to obtain the media content 123 via a network 105. The network 105 may include the Internet, a mobile telecommunications network (e.g., a long term evolution (LTE) based data network), or other data communication data system. The client 108 may be any user operated device for viewing video content from the media content 123, such as a computer, television, tablet device, smart phone, etc. The media communication session 125 may include making a media request, such as a HTTP based request (e.g., an HTTP GET request). In response to receiving an initial media request, the DASH content server 111 can forward the MPD to the client 108. The client 108 can then employ the information in the MPD to make additional media requests for the media content 123 as part of the media communication session 125. Specifically, the client 108 can employ the data in the MPD to determine which portions of the media content 123 should be obtained, for example based on user preferences, user selections, buffer/network conditions, etc. Upon selecting the relevant portions of the media content 123, the client 108 uses the data in the MPD to address the media request to the location at the DASH content server 111 that contains the relevant data. The DASH content server 111 can then respond to the client 108 with the requested portions of the media content 123. In this way, the client 108 receives requested portions of the media content 123 without having to download the entire media content 123, which saves network resources (e.g., time, bandwidth, etc.) across the network 105.

The decoder 107 is a device at the user's location (e.g., implemented on the client 108) that is configured to reverse the coding process of the encoder 103 to decode the encoded bitstream(s) obtained in representations from the DASH content server 111. The decoder 107 also merges the resulting sub-picture video streams to reconstruct a VR video sequence 129. The VR video sequence 129 contains the portion of the media content 123 as requested by the client 108 based on user selections, preferences, and/or network conditions and as reconstructed by the decoder 107. The VR video sequence 129 can then be forwarded to the rendering device 109. The rendering device 109 is a device configured to display the VR video sequence 129 to the user. For example, the rendering device 109 may include an HMD that is attached to the user's head and covers the user's eyes. The rendering device 109 may include a screen for each eye, cameras, motion sensors, speakers, etc. and may communicate with the client 108 via wireless and/or wired connections. In other examples, the rendering device 109 can be a display screen, such as a television, a computer monitor, a tablet personal computer (PC), etc. The rendering device 109 may display a sub-portion of the VR video sequence 129 to the user. The sub-portion shown is based on the FOV and/or viewport of the rendering device 109. As used herein, a viewport is a two dimensional plane upon which a defined portion of a VR video sequence 129 is projected. A FOV is a conical projection from a user's eye onto the viewport, and hence describes the portion of the VR video sequence 129 the user can see at a specified point in time. The rendering device 109 may change the position of the FOV and viewport based on user head movement by employing the motion tracking sensors. This allows the user to see different portions of the spherical video stream depending on head movement. In some cases, the rendering device 109 may offset the FOV for each eye based on the user's interpupillary distance (IPD) to create the impression of a three dimensional space. In some cases, the FOV and viewport may be predefined to provide a particular experience to the user. In other examples, the FOV and viewport may be controlled by mouse, keyboard, remote control, or other input devices.

The client 108 also includes an MCR module 106, which is a module configured to query measurable data from various functional modules operating on the client 108 and/or rendering device 109, calculate specified metrics, and/or communicate such metrics to interested parties. The MCR module 106 may reside inside or outside of the VR client 108. The specified metrics may then be reported to an analytics server, such as DASH content server 111 or other entities interested and authorized to access such metrics. The analytics server or other entities may use the metrics data to analyze the end user experience, assess client 108 device capabilities, and evaluate the immersive system performance in order to enhance the overall immersive service experience across network 105, platform, device, applications, and/or services.

For example, the MCR module 106 can measure and report the viewport upon which the VR video sequence 129 is rendered at the rendering device 109. As the viewport may change over time, the MCR module 106 may maintain awareness of the viewport used for rendering each frame of the VR video sequence 129. In some cases, multiple rendering devices 109 can be employed simultaneously by the client 108. For example, the client 108 can be coupled to an HMD, a computer display screen, and/or a television. As a specific example, the HMD may render the VR video sequence 129 onto a viewport selected based on the user's head movement. Meanwhile, the display screen and/or television may render the VR video sequence 129 onto a viewport selected based on instructions in a hint track, and hence display a predefined FOV and viewport. In another example, a first user may select the FOV and viewport used by the HMD while a second user selects the FOV and viewport used by the display/television. Further, multiple users may employ multiple HMDs with different FOVs and viewports used to render a shared VR video sequence 129. As such, multiple cases exist where a MCR module 106 may be directed to measure and report multiple viewports across multiple frames of the VR video sequence 129.

The MCR module 106 can measure and report viewport information for one or more clients 108 and/or rendering devices 109 by employing a rendered viewports metric, which may include an unordered set or an ordered list of entries. Each entry contains a rendered viewport, a start time specifying an initiate media sample of the VR video sequence 129 associated with the viewport, and a duration the viewport was used. This allows the viewport for multiple frames of the VR video sequence 129 to be described in a single entry when the viewport does not change. For example, a user may view the same portion of the VR video sequence 129 for several seconds without changing the viewport. As a particular example, three seconds of video at sixty frames per second results in rendering onto one hundred eighty viewports. By describing the viewports in a rendered viewports metric, all one hundred eighty viewports can be described in a single entry when the viewport does not change rather than signaling one hundred eighty data objects describing the same viewport. Further, entries from multiple rendering devices 109 (e.g., from an HMD and a display) can be aggregated by a client 108 into a single rendered viewports metric in order to compactly signal the viewports from multiple sources. Further, the MCR module 106 can encode the relevant viewports into the rendered viewports metric and forward the rendered viewports metric back to the service provider (e.g., the DASH content server 111) at the end of the VR video sequence 129, periodically during rendering, at specified break points, etc. The timing of the communication of the rendered viewports metric may be set by the user and/or by the service provider (e.g., by agreement).

In some examples, the network 105 may include a media aware intermediate NE 113. The media aware intermediate NE 113 is a device that maintains awareness of media communication sessions 125 between one or more DASH content servers 111 and one or more clients 108. For example communications associated with the media communication sessions 125, such as setup messages, tear down messages, status messages, and/or data packets containing VR video data may be forwarded between the DASH content server(s) 111 and the client(s) 108 via the media aware intermediate NE 113. Further, metrics from the MCR module 106 may be returned via the media aware intermediate NE 113. Accordingly, the media aware intermediate NE 113 can aggregate viewport data from multiple clients 108 for communication back to the service provider. Hence, the media aware intermediate NE 113 can receive viewport data (e.g., in rendered viewports metric(s)) from a plurality of clients 108, (e.g., with one or more rendering devices 109 associated with each client 108) aggregate such data as entries in a rendered viewports metric, and forward the rendered viewports metric back to the service provider. As such, the rendered viewports metric provides a convenient mechanism to compactly report an arbitrary number of rendered viewports in a single metric. This approach may both reduce the raw amount of viewport data communicated by removing communication of multiple copies of the same viewport data for successive frames and reduce the amount of network 105 traffic by aggregating viewport data from multiple sources into a single metric. Hence, the rendered viewports metric allows the client 108, the network 105, the media aware intermediate NE 113, and/or the DASH content server 111 to operate in a more efficient manner by reducing communication bandwidth usage and memory usage for communicating viewport information.

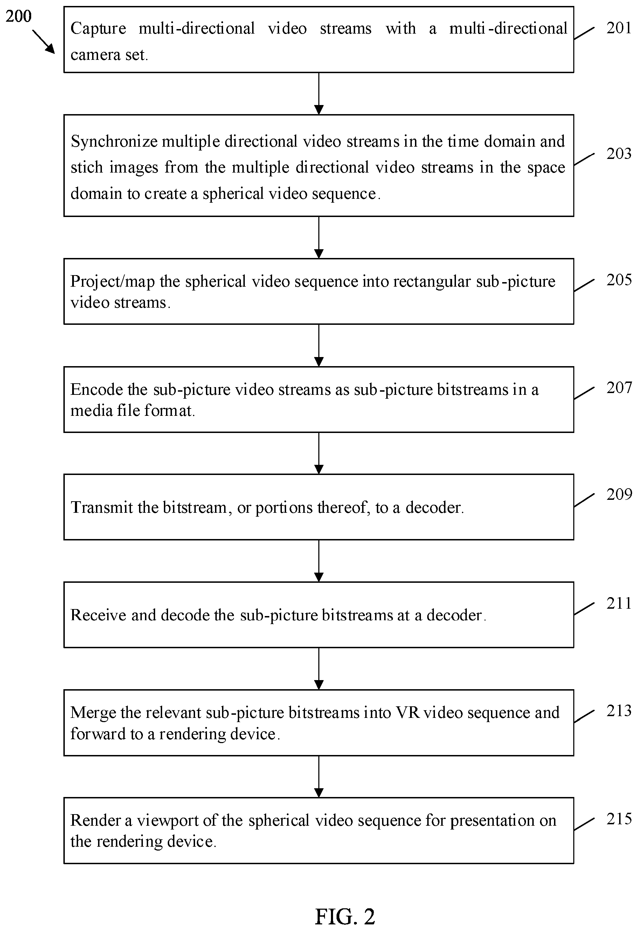

FIG. 2 is a flowchart of an example method 200 of coding a VR video, for example by employing the components of system 100. At step 201, a multi-directional camera set, such as multi-directional camera 101, is used to capture multiple directional video streams. The multiple directional video streams include views of an environment at various angles. For example, the multiple directional video streams may capture video from three hundred sixty degrees, one hundred eighty degrees, two hundred forty degrees, etc. around the camera in the horizontal plane. The multiple directional video streams may also capture video from three hundred sixty degrees, one hundred eighty degrees, two hundred forty degrees, etc. around the camera in the vertical plane. The result is to create video that includes information sufficient to cover a spherical area around the camera over some period of time.

At step 203, the multiple directional video streams are synchronized in the time domain. Specifically, each directional video stream includes a series of images taken at a corresponding angle. The multiple directional video streams are synchronized by ensuring frames from each directional video stream that were captured at the same time domain position are processed together. The frames from the directional video streams can then be stitched together in the space domain to create a spherical video stream. Hence, each frame of the spherical video stream contains data taken from the frames of all the directional video streams that occur at a common temporal position.

At step 205, the spherical video stream is mapped into rectangular sub-picture video streams. This process may also be referred to as projecting the spherical video stream into rectangular sub-picture video streams. Encoders and decoders are generally designed to encode rectangular and/or square frames. Accordingly, mapping the spherical video stream into rectangular sub-picture video streams creates video streams that can be encoded and decoded by non-VR specific encoders and decoders, respectively. It should be noted that steps 203 and 205 are specific to VR video processing, and hence may be performed by specialized VR hardware, software, or combinations thereof.

At step 207, the rectangular sub-picture video streams making up the VR video can be forwarded to an encoder, such as encoder 103. The encoder then encodes the sub-picture video streams as sub-picture bitstreams in a corresponding media file format. Specifically, each sub-picture video stream can be treated by the encoder as a video signal. The encoder can encode each frame of each sub-picture video stream via inter-prediction, intra-prediction, etc. Regarding file format, the sub-picture video streams can be stored in ISOBMFF. For example, the sub-picture video streams are captured at a specified resolution. The sub-picture video streams can then be downsampled to various lower resolutions for encoding. Each resolution can be referred to as a representation. Lower quality representations lose image clarity while reducing file size. Accordingly, lower quality representations can be transmitted to a user using fewer network resources (e.g., time, bandwidth, etc.) than higher quality representations with an attendant loss of visual quality. Each representation can be stored in a corresponding set of tracks at a DASH content server, such as DASH content server 111. Hence, tracks can be sent to a user, where the tracks include the sub-picture bitstreams at various resolutions (e.g., visual quality).

At step 209, the sub-picture bitstreams can be sent to the decoder as tracks. Specifically, an MPD describing the various representations can be forwarded to the client from the DASH content server. This can occur in response to a request from the client, such as an HTTP GET request. For example, the MPD may describe various adaptation sets containing various representations. The client can then request the relevant representations, or portions thereof, from the desired adaptation sets.

At step 211, a decoder, such as decoder 107, receives the requested representations containing the tracks of sub-picture bitstreams. The decoder can then decode the sub-picture bitstreams into sub-picture video streams for display. The decoding process involves the reverse of the encoding process (e.g., using inter-prediction and intra-prediction). Then, at step 213, the decoder can merge the sub-picture video streams into the spherical video stream for presentation to the user as a VR video sequence. The decoder can then forward the VR video sequence to a rendering device, such as rendering device 109.

At step 215, the rendering device renders a FOV of the spherical video stream onto a viewport for presentation to the user. As mentioned above, areas of the VR video sequence outside of the FOV and viewport at corresponding points in time may not be rendered.

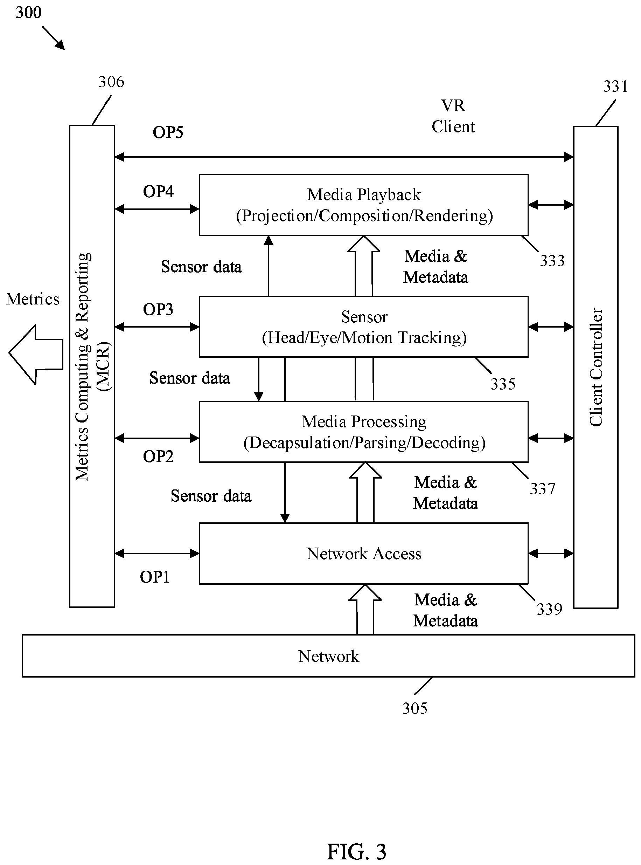

FIG. 3 is a schematic diagram of an example architecture 300 for VR video presentation by a VR client, such as a client 108 as shown in FIG. 1. Hence, architecture 300 may be employed to implement steps 211, 213, and/or 215 of method 200 or portions thereof. The architecture 300 may also be referred to as an immersive media metrics client reference model, and employs various observation points (OPs) for measuring metrics.

The architecture 300 includes a client controller 331, which includes hardware to support performance of client functions. Hence, the client controller 331 may include processor(s), random access memory, read only memory, cache memory, specialized video processors and corresponding memory, communications busses, network cards (e.g., network ports, transmitters, receivers), etc. The architecture 300 includes a network access module 339, a media processing module 337, a sensor module 335, and a media playback module 333, which are functional modules containing related functions operating on the client controller 331. As a specific example, the VR client may be configured as an OMAF player for file/segment reception or file access, file/segment decapsulation, decoding of audio, video, or image bitstreams, audio and image rendering, and viewport selection configured according to such modules.

The network access module 339 contains functions related to communications with a network 305, which may be substantially similar to network 105. Hence, the network access module 339 initiates a communication session with a DASH content server via the network 305, obtains an MPD, and employs HTTP functions (e.g., GET, POST, etc.) to obtain VR media and supporting metadata. The media includes video and audio data describing the VR video sequence, and can include encoded VR video frames and encoded audio data. The metadata includes information that indicates to the VR client how the VR video sequence should be presented. In a DASH context, the media and metadata may be received as tracks and/or track segments of selected representations from corresponding adaptation sets. The network access module 339 forwards the media and metadata to the media processing module 337.

The media processing module 337 may be employed to implement a decoder 107 of system 100. The media processing module 337 manages decapsulation which is the process of removing headers from network packets to obtain data from a packet payload, in this case the media and metadata. The media processing module 337 also manages parsing which is the process of analyzing bits in the packet payload to determine the data contained therein. The media processing module 337 also decodes the parsed data by employing partitioning to determine the position of coding blocks, applying reverse transforms to obtain residual data, employing intra-prediction and/or inter-prediction to obtain coding blocks, applying the residual data to the coding blocks to reconstruct the encoded pixels of the VR image, and merging the VR image data together to create a VR video sequence. The decoded VR video sequence is forwarded to the media playback module 333.

The client controller 331 may also include a sensor module 335. For example, an HMD may include multiple sensors to determine user activity. The sensor module 335 on the client controller 331 interprets output from such sensors. For example, the sensor module 335 may receive data indicating movement of the HMD which can be interpreted as head movement of the user. The sensor module 335 may also receive eye tracking information indicating user eye movement. The sensor module 335 may also receive other motion tracking information as well as any other VR presentation related input from the user. The sensor module 335 processes such information and outputs sensor data. Such sensor data may indicate the user's current FOV and/or changes in user FOV over time based on motion tracking (e.g., head and/or eye tracking). The sensor data may also include any other relevant feedback from the rendering device. The sensor data can be forwarded to the network access module 339, the media processing module 337, and/or the media playback module 333 as desired.

The media playback module 333 employs the sensor data, the media data, and the metadata to manage rendering of the VR sequence by the relevant rendering device, such as rendering device 109 of system 100. For example, the media playback module 333 may determine the preferred composition of the VR video sequence based on the metadata (e.g., based on frame timing/order, etc.) The media playback module 333 may also create a spherical projection of the VR video sequence. In the event that the rendering device is a screen, the media playback module 333 may determine a relevant FOV and viewport based on user input received at the client controller 331 (e.g., from a mouse, keyboard, remote, etc.) When the rendering device is an HMD, the media playback module 333 may determine the FOV and viewport based on sensor data related to head and/or eye tracking. The media playback module 333 employs the determined FOV and to determine the section(s) of the spherical projection of the VR video sequence to render onto the viewport. The media playback module 333 can then forward the portion of the VR video sequence to be rendered to the rendering device for display to the user.

The architecture 300 also includes an MCR module 306, which may be employed to implement a MCR module 106 from system 100. The MCR module 306 queries the measurable data from the various functional modules and calculates specified metrics. The MCR module 306 may reside inside or outside of the VR client. The specified metrics may then be reported to an analytics server or other entities interested and authorized to access such metrics. The analytics server or other entities may use the metrics data to analyze the end user experience, assess client device capabilities, and evaluate the immersive system performance in order to enhance the overall immersive service experience across network, platform, device, applications, and services. The MCR module 306 can review data by employing various interfaces, referred to as observation points, and denoted as OP1, OP2, OP3, OP4, and OP5. The MCR module 306 can also determine corresponding metrics based on the measured data, which can be reported back to the service provider.

OP1 allows the MCR module 306 to access to the network access module 339, and hence allows the MCR module 306 to measure metrics related to issuance of media file/segment requests and receipt of media files or segment streams from the network 305.

OP2 allows the MCR module 306 to access the media processing module 337, which processes the file or the received segments, extracts the coded bitstreams, parses the media and metadata, and decodes the media. The collectable data of OP2 may include various parameters such as MPD information, which may include media type, media codec, adaptation set, representation, and/or preselection identifiers (IDs). OP2 may also collect OMAF metadata such as omnidirectional video projection, omnidirectional video region-wise packing, and/or omnidirectional viewport. OP2 may also collect other media metadata such as frame packing, color space, and/or dynamic range.

OP3 allows the MCR module 306 to access the sensor module 335, which acquires the user's viewing orientation, position, and interaction. Such sensor data may be used by network access module 339, media processing module 337, and media playback module 333 to retrieve, process, and render VR media elements. For example, the current viewing orientation may be determined by the head tracking and possibly also eye tracking functionality. Besides being used by the renderer to render the appropriate part of decoded video and audio signals, the current viewing orientation may also be used by the network access module 339 for viewport dependent streaming and by the video and audio decoders for decoding optimization. OP3, for example, may measure various information of collectable sensor data, such as the center point of the current viewport, head motion tracking, and/or eye tracking.

OP4 allows the MCR module 306 to access the media playback module 333, which synchronizes playbacks of the VR media components to provide a fully immersive VR experience to the user. The decoded pictures can be projected onto the screen of a head-mounted display or any other display device based on the current viewing orientation or viewport based on metadata that includes information on region-wise packing, frame packing, projection, and sphere rotation. Likewise, decoded audio is rendered (e.g. through headphones) according to the current viewing orientation. The media playback module 333 may support color conversion, projection, and media composition for each VR media component. The collectable data from OP4 may, for example, include the media type, the media sample presentation timestamp, wall clock time, actual rendered viewport, actual media sample rendering time, and/or actual rendering frame rate.

OP 5 allows the MCR module 306 to access the VR client controller 331, which manages player configurations such as display resolution, frame rate, FOV, lens separation distance, etc. OP5 may be employed to measure client capability and configuration parameters. For example, the collectable data from OP5 may include display resolution, display density (e.g., in units of pixels per inch (PPI)), horizontal and vertical FOV (e.g., in units of degrees), media format and codec support, and/or operating system (OS) support.

Accordingly, the MCR module 306 can determine various metrics related to VR video sequence rendering and communicate such metrics back to a service provider via the network access module 339 and the network 305. For example, the MCR module 306 can determine the viewports rendered by one or more rendering devices, for example via OP3 and/or OP4. The MCR module can then include such information in a rendered viewports metric for communication back to the service provider.

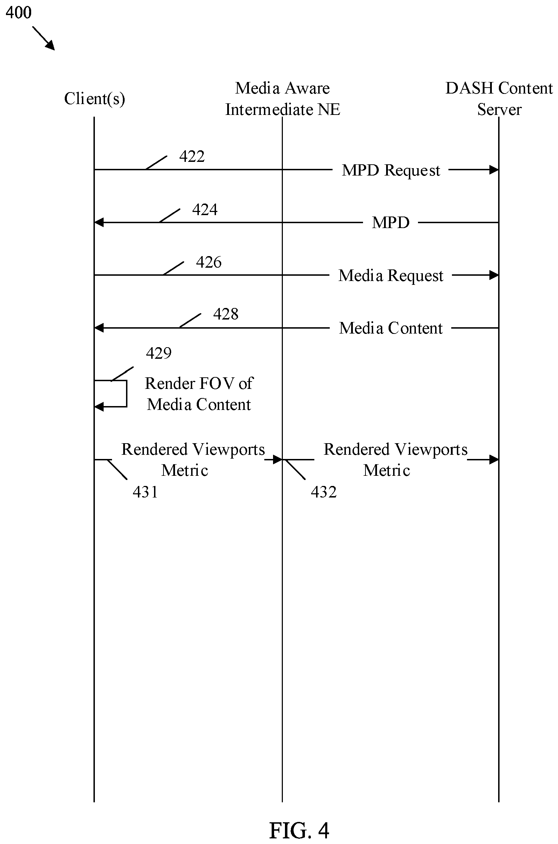

FIG. 4 is a protocol diagram of an example media communication session 400. For example, media communication session 400 can be employed to implement a media communication session 125 in system 100. Further, media communication session 400 can be employed to implement steps 209 and/or 211 of method 200. Further, media communication session 400 can be employed to communicate media and metadata to a VR client functioning according to architecture 300 and return corresponding metrics computed by a MCR module 306.

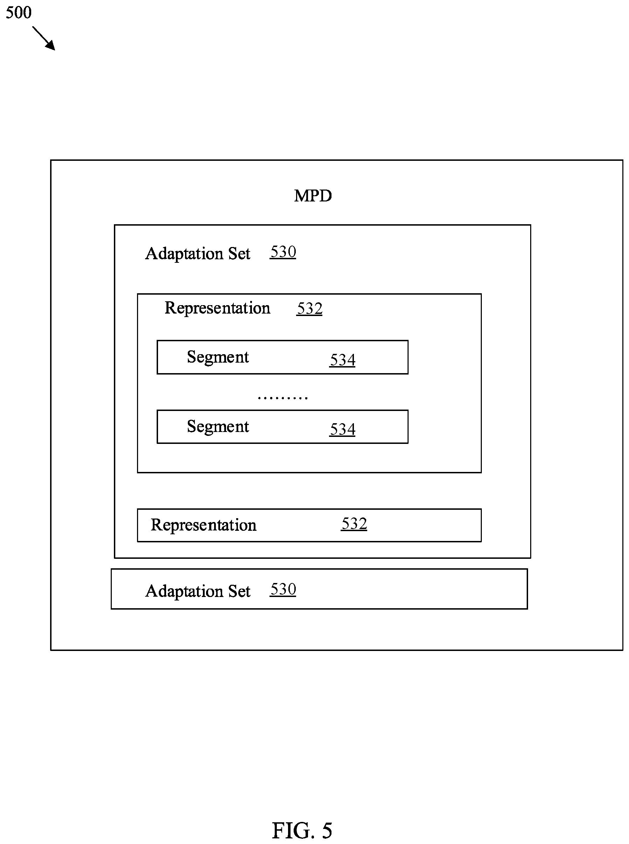

Media communication session 400 may begin at step 422 when a client, such as client 108, sends an MPD request message to a DASH content server, such as DASH content server 111. The MPD request is an HTTP based request for an MPD file describing specified media content, such as a VR video sequence. The DASH content server receives the MPD request of step 422 and responds by sending an MPD to the client at step 424. The MPD describes the video sequence and describes a mechanism for determining the location of the components of the video sequence. This allows the client to address requests for desired portions of the media content. An example MPD is described in greater detail with reference to FIG. 5 below.

Based on the MPD, the client can make media requests from the DASH content server at step 426. For example, media content can be organized into adaptation sets. Each adaptation set may contain one or more interchangeable representations. The MPD describes such adaptation sets and representations. The MPD may also describe the network address location of such representations via static address(es) and/or an algorithm to determine the address(es) of such representations. Accordingly, the client creates media requests to obtain the desired representations based on the MPD of step 424. This allows the client to dynamically determine the desired representations (e.g., based on network speed, buffer status, requested viewpoint, FOV/viewport used by the user, etc.). The client then sends the media requests to the DASH content server at step 426. The DASH content server replies to the media requests of step 426 by sending messages containing media content back to the client at step 428. For example, the DASH content server may send a three second clip of media content to the client at step 428 in response to a media request of step 426. This allows the client to dynamically change representations, and hence resolutions, based on changing conditions (e.g., request higher resolution segments when network conditions are favorable and lower resolution segments when the network is congested, etc.). As such, media requests at step 426 and responsive media content message at step 428 may be exchanged repeatedly.

The client renders the received media content at step 429. Specifically, the client may project the received media content of step 428 (according to media playback module 333), determine an FOV of the media content based on user input or sensor data, and render the FOV of the media content onto a viewport at one or more rendering devices. As noted above, the client may employ an MCR module to measure various metrics related to the rendering process. Accordingly, the client can also generate a rendered viewports metric at step 429. The rendered viewports metric contains an entry for each one of the viewports actually rendered at one or more rendering devices. Each entry indicates the viewport used as well as the start time associated with the initial use of the viewport by the corresponding rendering device and a duration of use of the viewport. Accordingly, the rendered viewports metric can be employed to report multiple viewports rendered for one or more rendering devices employed by the client. The rendered viewports metric is then sent from the client toward the DASH content server at step 431.

In other examples, a media aware intermediate NE may operate in a network between the client and DASH content server. Specifically, the media aware intermediate NE may passively listen to media communication sessions 400 between one or more DASH content servers and a plurality of clients, each with one or more rendering devices. Accordingly, the clients may forward viewport information to the media aware intermediate NE, either in a rendered viewports metric of step 431 or other data message. The media aware intermediate NE can then aggregate the viewport information from the plurality of clients in a rendered viewports metric at step 432, which is substantially similar to rendered viewports metric of step 431 but contains viewports corresponding to multiple clients. The rendered viewports metric can then be sent toward the DASH content server at step 432. It should be noted that the rendered viewports metric of steps 431 and/or 432 can be sent to any server operated by the service provider, such as a DASH content server, an analytics server, or other server. The DASH content server is used in this example to support simplicity and clarity and hence should not be considered limiting unless otherwise specified.

FIG. 5 is a schematic diagram of an example DASH MPD 500 that may be employed for streaming VR video during a media communication session. For example, MPD 500 can be used in a media communication session 125 in system 100. Hence, an MPD 500 can be used as part of steps 209 and 211 of method 200. Further, MPD 500 can be employed by a network access module 339 of architecture 300 to determine media and metadata to be requested. In addition, MPD 500 can be employed to implement an MPD of step 424 in media communication session 400.

The MPD 500 can also include one or more adaptation set(s) 530. An adaptation set 530 contains one or more representations 532. Specifically, an adaptation set 530 contains representations 532 that are of a common type and that can be rendered interchangeably. For example, audio data, video data, and metadata would be positioned in different adaptation sets 530 as a type of audio data that cannot be swapped with a type of video data without effecting the media presentation. Further, video from different viewpoints are not interchangeable as such videos contain different images, and hence could be included in different adaptation sets 530.

Representations 532 may contain media data that can be rendered to create a part of a multi-media presentation. In the video context, representations 532 in the same adaptation set 530 may contain the same video at different resolutions. Hence, such representations 532 can be used interchangeably depending on the desired video quality. In the audio context, representations 532 in a common adaptation set 530 may contain audio of varying quality as well as audio tracks in different languages. A representation 532 in an adaptation set 530 can also contain metadata such as a timed metadata track (e.g., a hint track). Hence, a representation 532 containing the time metadata can be used in conjunction with a corresponding video representation 532, an audio representation 532, a closed caption representation 532, etc. to determine how such media representations 532 should be rendered. For example, the timed metadata representation 532 may indicate a preferred viewpoint and/or a preferred FOV/viewport over time. Metadata representations 532 may also contain other supporting information such as menu data, encryption/security data, copyright data, compatibility data, etc.

Representations 532 may contain segments 534. A segment 534 contains media data for a predetermined time period (e.g., three seconds). Accordingly, a segment 534 may contain a portion of audio data, a portion of video data, etc. that can be accessed by a predetermined universal resource locator (URL) over a network. The MPD 500 contains data indicating the URL for each segment 534. Accordingly, a client can select the desired adaptation set(s) 530 that should be rendered. The client can then determine the representations 532 that should be obtained based on current network congestion. The client can then request the corresponding segments 534 in order to render the media presentation for the user.

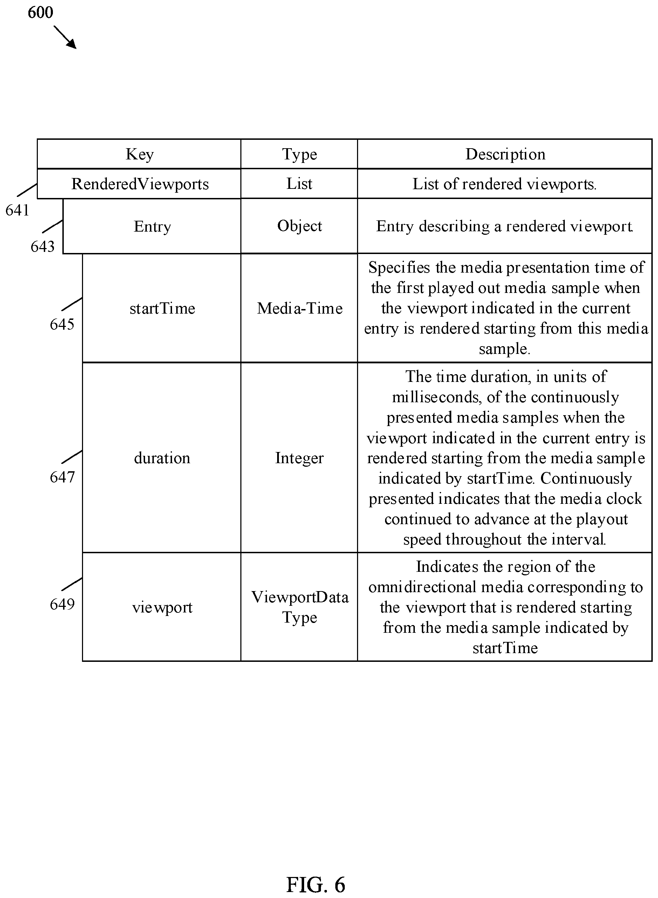

FIG. 6 is a schematic diagram illustrating an example rendered viewports metric 600. The rendered viewports metric 600 can be employed as part of a media communication session 125 in system 100, and can be employed in response to step 209 and step 211 of method 200. For example, the rendered viewports metric 600 can carry metrics computed by an MCR module 306 of architecture 300. The rendered viewports metric 600 can also be employed to implement a rendered viewports metric at steps 431 and/or 432 of media communication session 400.

The rendered viewports metric 600 includes data objects, which may also be referred to by key words. The data objects may include a corresponding type with a description as shown in FIG. 6. Specifically, a rendered viewports metric 600 can include a RenderedViewports 641 object of type list, which indicates an ordered list. The RenderedViewports 641 object includes a list of viewports as rendered by one or more rendering devices at one or more clients. Hence, the RenderedViewports 641 object can include a data describing a plurality of viewports rendered by a plurality of rendering devices that can be supported by a common client and/or aggregated from multiple clients.

The RenderedViewports 641 object of the rendered viewports metric 600 includes an entry 643 object for each of the (e.g., a plurality of) viewports rendered for a user by one or more rendering devices. Specifically, an entry 643 object can include a viewport rendered by a single VR client device at a corresponding rendering device. Hence, a rendered viewports metric 600 may include one or more (or a plurality of) entries 643 including a viewport.

Each entry 643 object may include a viewport 649 of element type ViewportDataType. The viewport 649 specifies a region of the omnidirectional media (e.g., VR video sequence) rendered by the corresponding viewport associated with the entry 643 object (e.g., that is rendered starting from a media sample indicated by startTime 645). Each entry 643 object also includes a startTime 645 of type media-time. The startTime 645 specifies the media presentation time of an initial media sample of the VR video sequence applied while rendering a corresponding viewport 649 associated with the current entry 643 object. Each entry 643 object also includes a duration 647 of type integer. The duration 647 specifies a time duration of continuously presented media samples of the VR video sequence applied to the corresponding viewpoint 649 associated with the entry 643 object. Continuously presented indicates that a media clock continued to advance at a playout speed throughout the interval described by duration 647.

It should be noted that, while the rendered viewports metric 600 may also be implemented by replacing duration 647 with an endTime coded as media-time type. Such an endTime would then specify a media presentation time of a final media sample of the VR video sequence applied while rendering the corresponding viewport 649 associated with the current entry 643 object (e.g., starting from the media sample indicated by startTime 645).

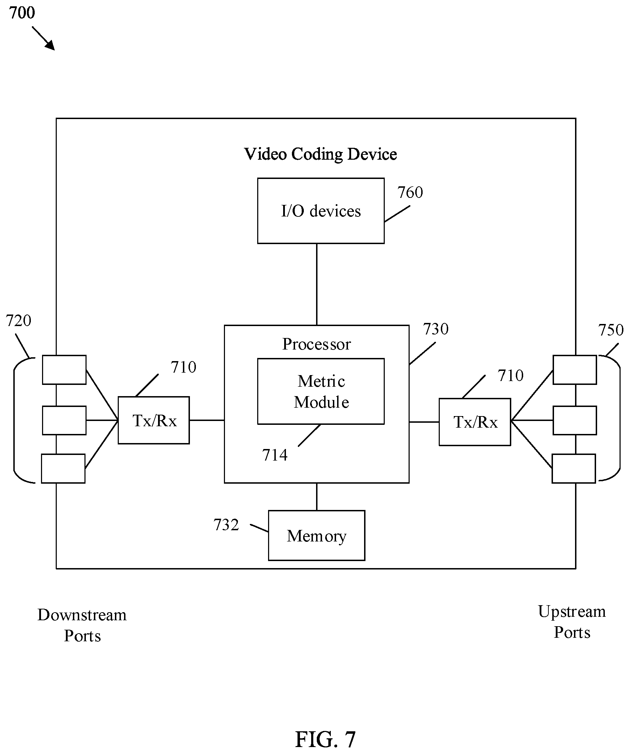

FIG. 7 is a schematic diagram illustrating an example video coding device 700. The video coding device 700 is suitable for implementing the disclosed examples/embodiments as described herein. The video coding device 700 comprises downstream ports 720, upstream ports 750, and/or transceiver units (Tx/Rx) 710, including transmitters and/or receivers for communicating data upstream and/or downstream over a network. The video coding device 700 also includes a processor 730 including a logic unit and/or central processing unit (CPU) to process the data and a memory 732 for storing the data. The video coding device 700 may also comprise optical-to-electrical (OE) components, electrical-to-optical (EO) components, and/or wireless communication components coupled to the upstream ports 750 and/or downstream ports 720 for communication of data via optical or wireless communication networks. The video coding device 700 may also include input and/or output (I/O) devices 760 for communicating data to and from a user. The I/O devices 760 may include output devices such as a display for displaying video data, speakers for outputting audio data, an HMD, etc. The I/O devices 760 may also include input devices, such as a keyboard, mouse, trackball, HMD sensors, etc., and/or corresponding interfaces for interacting with such output devices.

The processor 730 is implemented by hardware and software. The processor 730 may be implemented as one or more CPU chips, cores (e.g., as a multi-core processor), field-programmable gate arrays (FPGAs), application specific integrated circuits (ASICs), and digital signal processors (DSPs). The processor 730 is in communication with the downstream ports 720, Tx/Rx 710, upstream ports 750, and memory 732. The processor 730 comprises a metric module 714. The metric module 714 may implement all or part of the disclosed embodiments described above. For example, the metric module 714 can be employed to implement the functionality of a VR coding device 104, a DASH content server 111, a media aware intermediate NE 113, a client 108, and/or a rendering device 109, depending on the example. Further, the metric module 714 can implement relevant portions of method 200. In addition, the metric module 714 can be employed to implement architecture 300 and hence can implement an MCR module 306. As another example, metric module 714 can implement a media communication session 400 by communicating rendered viewports metric 600 in response to receiving an MPD 500 and rendering relatied VR video sequence(s). Accordingly, the metric module 714 can support rendering multiple viewports of one or more VR video sequence(s) on one or more clients, take measurements to determine the viewports rendered, encode the rendered viewports in a rendered viewports metric, and forward the rendered viewports metric containing multiple viewports toward a server controlled by a service provider to support storage optimization and enhancement of immersive media quality and related experiences. When implemented on an on a media aware intermediate NE 113, the metric module 714 may also aggregate viewport data from multiple clients for storage in the rendered viewports metric. As such, metric module 714 improves the functionality of the video coding device 700 as well as addresses problems that are specific to the video coding arts. Further, metric module 714 effects a transformation of the video coding device 700 to a different state. Alternatively, the metric module 714 can be implemented as instructions stored in the memory 732 and executed by the processor 730 (e.g., as a computer program product stored on a non-transitory medium).

The memory 732 comprises one or more memory types such as disks, tape drives, solid-state drives, read only memory (ROM), random access memory (RAM), flash memory, ternary content-addressable memory (TCAM), static random-access memory (SRAM), etc. The memory 732 may be used as an over-flow data storage device, to store programs when such programs are selected for execution, and to store instructions and data that are read during program execution.

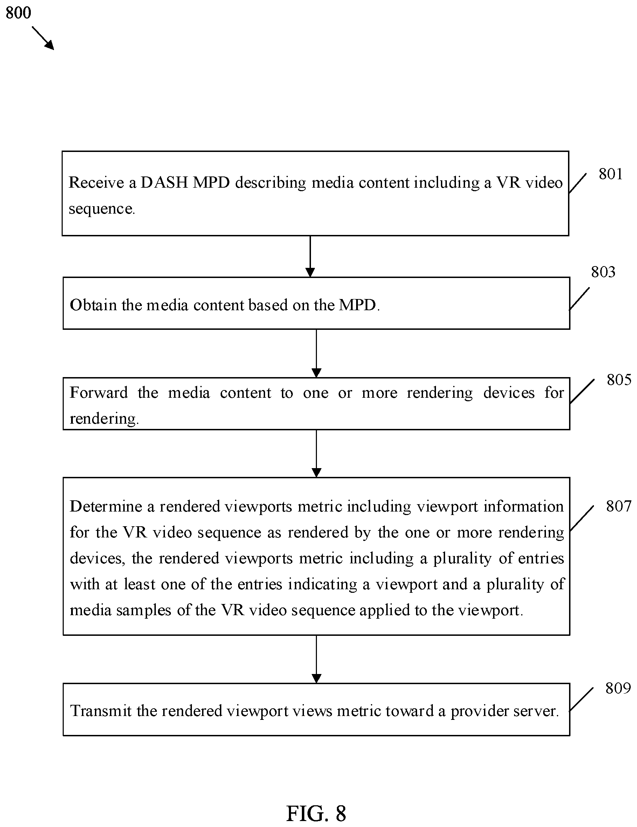

FIG. 8 is a flowchart of an example method 800 of communicating a rendered viewports metric, such as rendered viewports metric 600, containing information related to a plurality of viewports used for rendering at one or more rendering devices. As such, method 800 can be employed as part of a media communication session 125 in system 100, and/or as part of step 209 and step 211 of method 200. Further, method 800 can be employed to communicate metrics computed by an MCR module 306 of architecture 300. In addition, method 800 can be employed to implement media communication session 400. Also, method 800 may be implemented by a video coding device 700 in response to receiving an MPD 500.

Method 800 may be implemented by a DASH client-side NE, which may include a client, a media aware intermediate NE responsible for communicating with a plurality of clients, or combinations thereof. Method 800 may begin in response to transmitting an MPD request toward a DASH content server. Depending on the device operating the method 800 (e.g., a client or a media aware intermediate NE), such a request can be generated locally or received from one or more clients.

At step 801, a DASH MPD is received in response to the MPD request. The DASH MPD describes media content, and the media content includes a VR video sequence. The media content is then obtained based on the MPD at step 803. Such messages are generated and received by the relevant client(s) and may pass via a media aware intermediate NE, depending on the example. At step 805, the media content is forwarded to one or more rendering devices for rendering. Such rendering may occur simultaneously on the one or more rendering devices.

At step 807, a rendered viewports metric is determined. The rendered viewports metric indicates viewport information for the VR video sequence as rendered by the one or more rendering devices. The rendered viewports metric includes a plurality of entries with at least one of the entries indicating a viewport and a plurality of media samples of the VR video sequence applied to the viewport. When method 800 is implemented on a client, the rendered viewports metric includes viewports used for rendering on multiple rendering devices associated with (e.g., directly coupled to) the client. When method 800 is implemented on a media aware intermediate NE, the contents of viewport data from multiple clients can be employed to determine the contents of the rendered viewports metric. Once the rendered viewports metric is determined, the rendered viewports metric is forwarded toward a provider server at step 809. For example, the rendered viewports metric can be forwarded toward a DASH content server, an analytics server, or other data repository used by the service provider and/or the content producer that generated the VR video sequence.

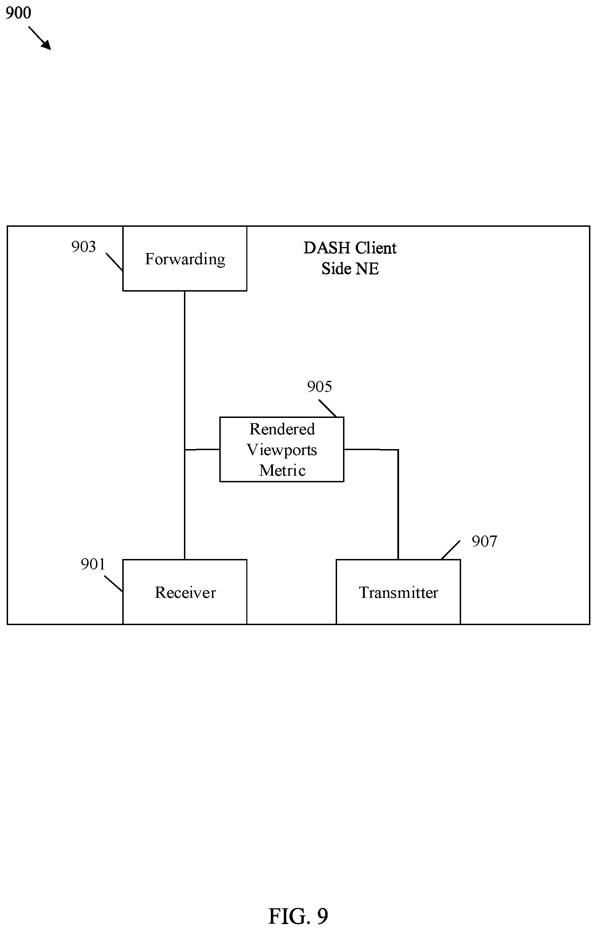

FIG. 9 is a schematic diagram of an example DASH client-side NE 900 for communicating a rendered viewports metric, such as rendered viewports metric 600, containing information related to a plurality of viewports used for rendering by one or more rendering devices. As such, DASH client-side NE 900 can be employed to implement a media communication session 125 in system 100, and/or to implement part of step 209 and step 211 of method 200. Further, DASH client-side NE 900 can be employed to communicate metrics computed by an MCR module 306 of architecture 300. In addition, DASH client-side NE 900 can be employed to implement a media communication session 400. Also, DASH client-side NE 900 may be implemented by a video coding device 700, and may receive an MPD 500. Further, DASH client-side NE 900 may be employed to implement method 800.

The DASH client-side NE 900 comprises a receiver 901 for receiving a DASH MPD describing media content including a VR video sequence, and obtaining the media content based on the MPD. The DASH client-side NE 900 also comprises a forwarding module 903 (e.g., transmitter, port, etc.) for forwarding the media content to one or more rendering devices for rendering. The DASH client-side NE 900 also comprises a rendered viewports metric module for determining a rendered viewports metric including viewport information for the VR video sequence as rendered by the one or more rendering devices, the rendered viewports metric including a plurality of entries with at least one of the entries indicating a viewport and a plurality of media samples of the VR video sequence applied to the viewport. The DASH client-side NE 900 also comprises a transmitter 907 for transmitting the rendered viewports metric toward a provider server.

A first component is directly coupled to a second component when there are no intervening components, except for a line, a trace, or another medium between the first component and the second component. The first component is indirectly coupled to the second component when there are intervening components other than a line, a trace, or another medium between the first component and the second component. The term "coupled" and its variants include both directly coupled and indirectly coupled. The use of the term "about" means a range including ±10% of the subsequent number unless otherwise stated.

## Claims

1. A method implemented in a Dynamic Adaptive Streaming over Hypertext Transfer Protocol, DASH, client-side network element NE, the method comprising:
receiving, by a receiver, a DASH Media Presentation Description, MPD, describing media content including a virtual reality, VR, video sequence;
obtaining, via the receiver, the media content based on the MPD;
forwarding the media content to multiple rendering devices for rendering;
determining, via a processor, a rendered viewports metric including viewport information for the VR video sequence as rendered by the multiple rendering devices, the rendered viewports metric including a plurality of entries with at least one of the entries indicating a viewport and a plurality of media samples of the VR video sequence applied to the viewport; and
transmitting, via a transmitter, the rendered viewports metric toward a provider server;
wherein the plurality of entries in the rendered viewports metric includes an entry object for each of a plurality of viewports rendered for a user by the multiple rendering devices;
wherein each entry object includes a start time element specifying a media presentation time of an initial media sample of the VR video sequence applied while rendering a corresponding viewport associated with the entry object; and
(i) wherein each entry object includes a duration element specifying a time duration of continuously presented media samples of the VR video sequence applied to the corresponding viewport associated with the entry object; or
(ii) wherein each entry object includes an end time element specifying a media presentation time of a final media sample of the VR video sequence applied while rendering the corresponding viewport associated with the entry object.

2. The method of claim 1, wherein each entry object includes a viewport element specifying a region of the VR video sequence rendered by the corresponding viewport associated with the entry object.

3. The method of claim 1 or 2, wherein the DASH client-side NE is a client, a media aware intermediate NE responsible for communicating with a plurality of clients, or combinations thereof.

4. A Dynamic Adaptive Streaming over Hypertext Transfer Protocol, DASH, client-side network element, NE, comprising:
a receiver configured to:
receive a DASH Media Presentation Description, MPD, describing media content including a virtual reality, VR, video sequence; and
obtain the media content based on the MPD;
one or more ports configured to forward the media content to multiple rendering devices for rendering; and
a processor coupled to the receiver and the ports, the processor configured to:
determine a rendered viewports metric including viewport information for the VR video sequence as rendered by the multiple rendering devices, the rendered viewports metric including a plurality of entries with at least one of the entries indicating a viewport and a plurality of media samples of the VR video sequence applied to the viewport; and
transmit, via the one or more ports, the rendered viewports metric toward a provider server;
wherein the plurality of entries in the rendered viewports metric includes an entry object for each of a plurality of viewports rendered for a user by the multiple rendering devices;
wherein each entry object includes a start time element specifying a media presentation time of an initial media sample of the VR video sequence applied while rendering a corresponding viewport associated with the entry object; and
(i) wherein each entry object includes a duration element specifying a time duration of continuously presented media samples of the VR video sequence applied to the corresponding viewport associated with the entry object; or
(ii) wherein each entry object includes an end time element specifying a media presentation time of a final media sample of the VR video sequence applied while rendering the corresponding viewport associated with the entry object.

5. The DASH client-side NE of claim 4, wherein each entry object includes a viewport element specifying a region of the VR video sequence rendered by the corresponding viewport associated with the entry object.

6. The DASH client-side NE of claim 4 or 5, wherein the DASH client-side NE is a client coupled to the one or more rendering devices via the one or more ports, and further comprising a transmitter configured to communicate with the DASH content server via at least one of the one or more ports.

7. The DASH client-side NE of claim 4 or 5, wherein the DASH client-side NE is a media aware intermediate NE, and further comprising at least one transmitter coupled to the one or more ports configured to forward the media content to one or more rendering devices via one or more clients and transmit the rendered viewports metric toward the DASH content server.

8. A non-transitory computer readable medium comprising a computer program product for use by a video coding device, the computer program product comprising computer executable instructions stored on the non-transitory computer readable medium such that when executed by a processor cause the video coding device to perform the method of any of claims 1-3.

## Patentansprüche

1. Verfahren, das in einem clientseitigen Netzwerkelement, NE, für dynamisches adaptives Streaming über Hypertextübertragungsprotokoll, DASH, umgesetzt wird, wobei das Verfahren Folgendes umfasst:
Empfangen, durch einen Empfänger, einer DASH-Mediendarstellungsbeschreibung, MPD, die Medieninhalt beschreibt, der eine Videosequenz für virtuelle Realität, VR, beinhaltet;
Erlangen, über den Empfänger, des Medieninhalts basierend auf der MPD;
Weiterleiten des Medieninhalts an mehrere wiedergebende Vorrichtungen zur Wiedergabe;
Bestimmen, durch einen Prozessor, einer Metrik für wiedergegebene Ansichtsfenster, die Ansichtsfensterinformationen für die VR-Videosequenz beinhaltet, wie sie durch die mehreren wiedergebenden Vorrichtungen wiedergegeben wird, wobei die Metrik für wiedergegebene Ansichtsfenster eine Vielzahl von Einträgen beinhaltet und mindestens einer der Einträge ein Ansichtsfenster und eine Vielzahl von Medienproben der VR-Videosequenz, die auf das Ansichtsfenster angewendet wird, angibt; und
Übermitteln, über einen Sender, der wiedergegebenen Ansichtsfenstermetrik an einen Anbieterserver;
wobei die Vielzahl von Einträgen in der Metrik für wiedergegebene Ansichtsfenster ein Eintragsobjekt für jedes einer Vielzahl von Ansichtsfenstern, das durch die mehreren wiedergebenden Vorrichtungen für einen Benutzer wiedergegeben wird, beinhaltet;
wobei jedes Eintragsobjekt ein Startzeitpunktelement beinhaltet, das eine Mediendarstellungszeit einer anfänglichen Medienprobe der VR-Videosequenz, die während der Wiedergabe eines entsprechenden, mit dem Eintragsobjekt assoziierten Ansichtsfensters angewendet wird, spezifiziert; und
(i) wobei jedes Eintragsobjekt ein Zeitdauerelement beinhaltet, das eine Zeitdauer von kontinuierlich dargestellten Medienproben der VR-Videosequenz, die auf das entsprechende, mit dem Eintragsobjekt assoziierten Ansichtsfenster angewendet wird, spezifiziert; oder
(ii) wobei jedes Eintragsobjekt ein Endzeitpunktelement beinhaltet, das eine Mediendarstellungszeit einer finalen Medienprobe der VR-Videosequenz, die während der Wiedergabe des entsprechenden, mit dem Eintragsobjekt assoziierten Ansichtsfensters angewendet wird, spezifiziert.

2. Verfahren nach Anspruch 1, wobei jedes Eintragsobjekt ein Ansichtsfensterelement beinhaltet, das eine Region der VR-Videosequenz, die durch das entsprechende, mit dem Eintragsobjekt assoziierte Ansichtsfenster wiedergegeben wird, spezifiziert.

3. Verfahren nach Anspruch 1 oder 2, wobei das DASH-clientseitige NE ein Client, ein medienbewusstes Zwischen-NE, das für die Kommunikation mit einer Vielzahl von Clients verantwortlich ist, oder Kombinationen daraus ist.

4. Clientseitiges Netzwerkelement, NE, für dynamisch adaptives Streaming über Hypertextübertragungsprotokoll, DASH, umfassend:
einen Empfänger, der zu Folgendem konfiguriert ist:
Empfangen einer DASH-Mediendarstellungsbeschreibung, MPD, die Medieninhalt beschreibt, der eine Videosequenz für virtuelle Realität, VR, beinhaltet; und
Erlangen des Medieninhalts basierend auf der MPD;
einen oder mehrere Anschlüsse, die dazu konfiguriert sind, den Medieninhalt an mehrere wiedergebende Vorrichtungen zur Wiedergabe weiterzuleiten; und
einen Prozessor, der an den Empfänger und die Anschlüsse gekoppelt ist, wobei der Prozessor zu Folgendem konfiguriert ist:
Bestimmen einer Metrik für wiedergegebene Ansichtsfenster, die Ansichtsfensterinformationen für die VR-Videosequenz beinhaltet, wie sie durch die mehreren wiedergebenden Vorrichtungen wiedergegeben wird, wobei die Metrik für wiedergegebene Ansichtsfenster eine Vielzahl von Einträgen beinhaltet und mindestens einer der Einträge ein Ansichtsfenster und eine Vielzahl von Medienproben der VR-Videosequenz, die auf das Ansichtsfenster angewendet wird, angibt; und
Übermitteln, über den einen oder die mehreren Anschlüsse, der wiedergegebenen Ansichtsfenstermetrik an einen Anbieterserver;
wobei die Vielzahl von Einträgen in der Metrik für wiedergegebene Ansichtsfenster ein Eintragsobjekt für jedes einer Vielzahl von Ansichtsfenstern, das durch die mehreren wiedergebenden Vorrichtungen für einen Benutzer wiedergegeben wird, beinhaltet;
wobei jedes Eintragsobjekt ein Startzeitpunktelement beinhaltet, das eine Mediendarstellungszeit einer anfänglichen Medienprobe der VR-Videosequenz, die während der Wiedergabe eines entsprechenden, mit dem Eintragsobjekt assoziierten Ansichtsfensters angewendet wird, spezifiziert; und
(i) wobei jedes Eintragsobjekt ein Zeitdauerelement beinhaltet, das eine Zeitdauer von kontinuierlich dargestellten Medienproben der VR-Videosequenz, die auf das entsprechende, mit dem Eintragsobjekt assoziierten Ansichtsfenster angewendet wird, spezifiziert; oder
(ii) wobei jedes Eintragsobjekt ein Endzeitpunktelement beinhaltet, das eine Mediendarstellungszeit einer finalen Medienprobe der VR-Videosequenz, die während der Wiedergabe des entsprechenden, mit dem Eintragsobjekt assoziierten Ansichtsfensters angewendet wird, spezifiziert.

5. DASH-clientseitiges NE nach Anspruch 4, wobei jedes Eintragsobjekt ein Ansichtsfensterelement beinhaltet, das eine Region der VR-Videosequenz, die durch das entsprechende, mit dem Eintragsobjekt assoziierte Ansichtsfenster wiedergegeben wird, spezifiziert.

6. DASH-clientseitiges NE nach Anspruch 4 oder 5, wobei das DASH-clientseitige NE ein Client ist, der über den einen oder die mehrere Anschlüsse an die eine oder die mehreren wiedergebenden Vorrichtungen gekoppelt ist, und ferner umfassend einen Sender, der dazu konfiguriert ist, über mindestens einen des einen oder der mehreren Anschlüsse mit dem DASH-Inhaltsserver zu kommunizieren.

7. DASH-clientseitiges NE nach Anspruch 4 oder 5, wobei das DASH-clientseitige NE ein medienbewusstes Zwischen-NE ist, und ferner umfassend mindestens einen Sender, der an den einen oder die mehreren Anschlüsse gekoppelt und dazu konfiguriert ist, den Medieninhalt über einen oder mehrere Clients an die eine oder die mehreren wiedergebenden Vorrichtungen weiterzuleiten und die Metrik für wiedergegebene Ansichtsfenster an den DASH-Inhaltsserver zu übermitteln.

8. Nicht transitorisches computerlesbares Medium, umfassend ein Computerprogrammprodukt zur Verwendung durch eine Videokodiervorrichtung, wobei das Computerprogrammprodukt computerausführbare Anweisungen umfasst, die in dem nicht transitorischen computerlesbaren Medium gespeichert sind, sodass sie bei Ausführung durch einen Prozessor die Videokodiervorrichtung dazu veranlassen, das Verfahren nach einem der Ansprüche 1-3 durchzuführen.

## Revendications

1. Procédé mis en œuvre dans un élément de réseau côté client, NE, d'une diffusion en continu adaptative dynamique sur un protocole de transfert hypertexte, DASH, le procédé comprenant :
la réception, par un récepteur, d'une description de présentation multimédia, MPD, de DASH, décrivant un contenu multimédia comportant une séquence vidéo de réalité virtuelle, VR ;
l'obtention, via le récepteur, du contenu multimédia basé sur le MPD ;
la transmission du contenu multimédia à plusieurs dispositifs de rendu pour le rendu ;
la détermination, via un processeur, d'une métrique de fenêtres d'affichage rendues comportant des informations de fenêtre d'affichage pour la séquence vidéo VR telle que rendue par les multiples dispositifs de rendu, la métrique de fenêtres d'affichage rendues comportant une pluralité d'entrées avec au moins l'une des entrées indiquant une fenêtre d'affichage et une pluralité d'échantillons multimédias de la séquence vidéo VR appliquée à la fenêtre d'affichage ; et
la transmission, via un émetteur, de la métrique des fenêtres d'affichage rendues vers un serveur fournisseur ;
dans lequel la pluralité d'entrées dans la métrique de fenêtres d'affichage rendues comportent un objet d'entrée pour chacune d'une pluralité de fenêtres d'affichage rendues pour un utilisateur par les multiples dispositifs de rendu ;
dans lequel chaque objet d'entrée comporte un élément d'heure de début spécifiant une heure de présentation multimédia d'un échantillon multimédia initial de la séquence vidéo VR appliquée lors du rendu d'une fenêtre d'affichage correspondante associée à l'objet d'entrée ; et
(i) dans lequel chaque objet d'entrée comporte un élément de durée spécifiant une durée temporelle d'échantillons multimédias présentés en continu de la séquence vidéo VR appliquée au point de vue correspondant associé à l'objet d'entrée ; ou
(ii) dans lequel chaque objet d'entrée comporte un élément d'heure de fin spécifiant une heure de présentation multimédia d'un échantillon multimédia final de la séquence vidéo VR appliquée lors du rendu de la fenêtre d'affichage correspondante associée à l'objet d'entrée.

2. Procédé selon la revendication 1, dans lequel chaque objet d'entrée comporte un élément de fenêtre d'affichage spécifiant une région de la séquence vidéo VR rendue par la fenêtre d'affichage correspondante associée à l'objet d'entrée.

3. Procédé selon la revendication 1 ou 2, dans lequel le NE côté client de DASH est un client, un NE intermédiaire compatible avec les médias chargé de communiquer avec une pluralité de clients, ou des combinaisons de ceux-ci.

4. Élément de réseau côté client, NE, de diffusion en continu adaptative dynamique sur protocole de transfert hypertexte, DASH, comprenant :
une unité de réception, configurée pour :
recevoir une description de présentation multimédia, MPD, de DASH, décrivant un contenu multimédia comportant une séquence vidéo de réalité virtuelle, VR ; et
obtenir le contenu multimédia basé sur le MPD ;
un ou plusieurs ports configurés pour transférer le contenu multimédia vers plusieurs dispositifs de rendu pour le rendu ; et
un processeur couplé au récepteur et aux ports, le processeur étant configuré pour :
déterminer une métrique de fenêtres d'affichage rendues comportant des informations de fenêtre d'affichage pour la séquence vidéo VR telle que rendue par les multiples dispositifs de rendu, la métrique de fenêtres d'affichage rendues comportant une pluralité d'entrées avec au moins l'une des entrées indiquant une fenêtre d'affichage et une pluralité d'échantillons multimédias de la séquence vidéo VR appliquée à la fenêtre d'affichage ; et
transmettre, via les un ou plusieurs ports, la métrique des fenêtres d'affichage rendues vers un serveur fournisseur ;
dans lequel la pluralité d'entrées dans la métrique de fenêtres d'affichage rendues comportent un objet d'entrée pour chacune d'une pluralité de fenêtres d'affichage rendues pour un utilisateur par les multiples dispositifs de rendu ;
dans lequel chaque objet d'entrée comporte un élément d'heure de début spécifiant une heure de présentation multimédia d'un échantillon multimédia initial de la séquence vidéo VR appliquée lors du rendu d'une fenêtre d'affichage correspondante associée à l'objet d'entrée ; et
(i) dans lequel chaque objet d'entrée comporte un élément de durée spécifiant une durée temporelle d'échantillons multimédias présentés en continu de la séquence vidéo VR appliquée au point de vue correspondant associé à l'objet d'entrée ; ou
(ii) dans lequel chaque objet d'entrée comporte un élément d'heure de fin spécifiant une heure de présentation multimédia d'un échantillon multimédia final de la séquence vidéo VR appliquée lors du rendu de la fenêtre d'affichage correspondante associée à l'objet d'entrée.

5. NE côté client de DASH selon la revendication 4, dans lequel chaque objet d'entrée comporte un élément de fenêtre d'affichage spécifiant une région de la séquence vidéo VR rendue par la fenêtre d'affichage correspondante associée à l'objet d'entrée.

6. NE côté client de DASH selon la revendication 4 ou 5, dans lequel le NE côté client de DASH est un client couplé aux un ou plusieurs dispositifs de rendu via les un ou plusieurs ports, et comprenant également un émetteur configuré pour communiquer avec le serveur de contenu de DASH via au moins l'un des un ou plusieurs ports.

7. NE côté client de DASH selon la revendication 4 ou 5, dans lequel le NE côté client de DASH est un NE intermédiaire prenant en charge les médias, et comprenant également au moins un émetteur couplé au(x) port(s) configuré(s) pour transférer le contenu multimédia vers un ou plusieurs dispositifs de rendu via un ou plusieurs clients et transmettre la métrique des fenêtres d'affichage rendues vers le serveur de contenu de DASH.

8. Support non transitoire lisible par ordinateur comprenant un produit de programme informatique destiné à être utilisé par un dispositif de codage vidéo, le produit de programme informatique comprenant des instructions exécutables par ordinateur stockées sur le support non transitoire lisible par ordinateur de sorte que, lorsqu'elles sont exécutées par un processeur, elles amènent le dispositif de codage vidéo à réaliser le procédé selon l'une quelconque des revendications 1 à 3.
